# EUROPEAN PATENT APPLICATION

(11) **EP 2 463 617 A1**
(43) Date of publication of application: **13.06.2012**
(21) Application number: 11192792.7
(22) Date of filing: 09.12.2011
(51) Int. Cl.: G01B 11/02, G01B 9/02

(54) **Systems for measuring distance by optic means**

(30) Priority: 10.12.2010 CN 201010601246
(71) Applicant: General Electric Company, Schenectady, NY 12345 (US)
(72) Inventor: Wan, Xinjun, Niskayuna, NY New York 12309 (US); Song, Guiju, Niskayuna, NY New York 12309 (US); Harding, Kevin George, Niskayuna, NY New York 12309 (US); Xu, Shukuan, Niskayuna, NY New York 12309 (US); Hayashi, Steven Robert, Niskayuna, NY New York 12309 (US); Tait, Robert William, Niskayuna, NY New York 12309 (US); Hoffman, James Joseph, Niskayuna, NY New York 12309 (US); Muchmore, Charles Walter, Clarksville, OH Ohio 45113 (US); Gluesenkamp, Matthew Michael, Niskayuna, NY New York 12309 (US)
(74) Representative: Williams, Andrew Richard

(57) **Abstract**

A distance measurement system comprises an optical distance sensor configured to generate a light beam, a first optical module, and a processor. The first optical module is configured to receive the light beam, and generate and selectively transmit a plurality of light beams having different light channels for projection onto one or more points of an object to generate one or more reflected light beams scattered from the respective one or more points of the object, and capture and transmit the one or more reflected light beams into the optical distance sensor to retrieve a plurality of distance data to the respective one or more points of the object. The processor is configured to process the distance data to determine position information of the respective one or more points of the object. A distance measurement method is also presented.

## Description

### BACKGROUND OF THE DISCLOSURE

Embodiments of the invention generally relate to measurement systems and methods. More particularly, embodiments of the invention relate to distance measurement systems and methods for measurement of a distance to a point of an object.

Machining systems, such as computer numerical controlled (CNC) machines (or "machining centers") are widely used for machining an object. During machining, dimension, such as a distance to a desired point of the machined object may need to be measured, so that the machining systems can adjust machining parameters to proceed with subsequent machining. Measurement of a distance to a point of an object is desirable to ensure that the objects are appropriately configured or shaped to achieve desirable quality.

There have been attempts to measure the distance to a point of an object. For example, some existing coordinate measurement machines (CMM) are employed to measure the distance to a point of an object. However, the measurement of such an object on the coordinate measurement machines is typically performed offline. In order to measure sizes of the object, machining processes of the object need to be paused so that the object is assembled onto the coordinate measurement machines to perform the measurement.

After measurement, the machining processes of the object may be restarted based on measurement results. However, for a precision object, it is not practical to remove the object from a machine tool and then remount the object on the machine tool due to the errors associated with realigning the object on the machine tool. Generally, such measurement may be performed several times to machine the object with desirable dimensions, which results in a lower productivity, lower quality due to remounting of the object and is time consuming.

In some current applications, touch probes are also employed. The touch probe does not measure the part directly, but rather uses the scales on the machine tool itself to make the measurement, with the touch probe providing a trigger used to take the measurement. The object can be left on the machine by using an on-machine touch probe so there is no loss in quality due to remounting of the object. Although such measurement increases the productivity since the object needs not to be detached from a machining device for measurement by the touch probes, it may be still time consuming due to a relatively long motion time of the touch probes on the object.

Therefore, there is a need for new and improved distance measurement systems and methods for measurement of distances to points of objects while the object is on a machine tool.

### BRIEF DESCRIPTION OF THE DISCLOSURE

A distance measurement system is provided in accordance with one embodiment of the invention. The distance measurement system comprises an optical distance sensor configured to generate a light beam, a first optical module, and a processor. The first optical module is configured to receive the light beam, and generate and selectively transmit a plurality of light beams having different light channels for projection onto one or more points of an object to generate one or more reflected light beams scattered from the respective one or more points of the object, and capture and transmit the one or more reflected light beams into the optical distance sensor to retrieve a plurality of distance data to the respective one or more points of the object. The processor is configured to process the distance data to determine position information of the respective one or more points of the object.

A distance measurement method is provided in accordance with another embodiment of the invention. The method comprises introducing a light beam from an optical sensor into a first optical module, generating and selectively transmitting a plurality of light beams having different light channels for projection onto one or more points of an object to generate one or more reflected light beams scattered from the respective one or more points of the object, capturing and transmitting the one or more reflected light beams into the optical distance sensor to retrieve a plurality of distance data to the respective one or more points of the object, and processing the distance data to determine position information of the respective one or more points of the object.

These and other advantages and features will be more understood from the following detailed description of preferred embodiments of the invention that is provided in connection with the accompanying drawings.

### BRIEF DESCRIPTION OF THE DRAWINGS

FIG. 1 is a schematic diagram of a distance measurement system in accordance with one embodiment of the invention;
FIG. 2 is a schematic diagram illustrating operation of a laser triangulation sensor of the distance measurement system in accordance with one embodiment of the invention;
FIGS. 3-4 are schematic diagrams of an exemplary first optical module of the distance measurement system in accordance with two embodiments of the invention;
FIG. 5 is a schematic diagram of an exemplary second optical module of the distance measurement system in accordance with one embodiment of the invention;
FIG. 6 is a schematic diagram of an exemplary third optical module of the distance measurement system in accordance with one embodiment of the invention; and
FIGS. 7-11 are schematic diagrams illustrating measurements of distances to points of objects in accordance with various embodiments.

### DETAILED DESCRIPTION OF THE INVENTION

Preferred embodiments of the present disclosure will be described hereinbelow with reference to the accompanying drawings. In the following description, well-known functions or constructions are not described in detail to avoid obscuring the disclosure in unnecessary detail.

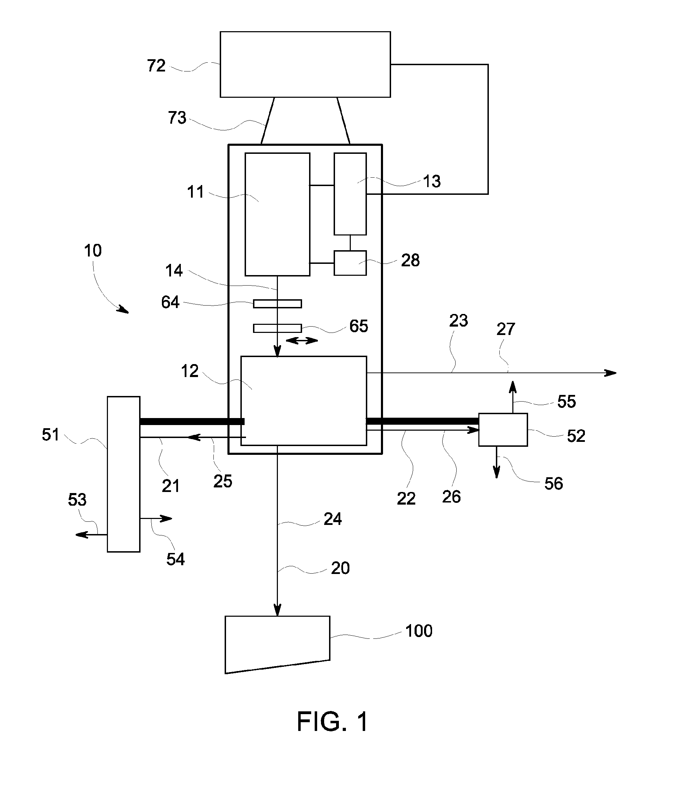

FIG. 1 illustrates a schematic diagram of a distance measurement system 10 for measurement of position information, such as a distance to a point of an object 100 and/or a distance between two points of the object 100 in accordance with one embodiment of the invention. As illustrated in FIG. 1, the distance measurement system 10 comprises an optical distance sensor 11, a first optical module 12, and a processor 13.

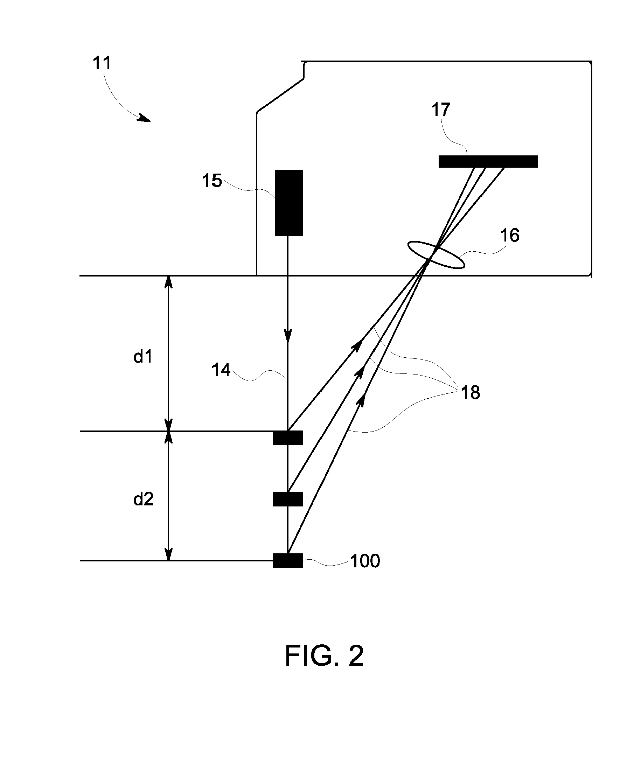

In some embodiments, the optical distance sensor 11 may define a stand off distance d1 and a measurement range d2 (shown in FIG. 2) for distance measurement of a point of an object located within the measurement range d2 thereof. In embodiments of the invention, the optical distance sensor 11 is configured to generate and transmit a light beam 14 for projection onto a point (not labeled) of the object 100, and to receive a reflected light beam scattered back from the point of the object 100 to retrieve position information, such as the distance to the point of the object 100. For easy illustration, although a single object 100 is illustrated, other objects may also be measured via respective light beams from the distance measurement system 10 based on different applications.

Non-limiting examples of the optical distance sensor 11 may include a laser triangulation sensor, a white light interferometry sensor, or other suitable optical distance sensors for distance measurement. In one non-limiting example, the optical distance sensor 11 comprises a laser triangulation sensor sold under the tradename of Selcom SLS5000, by LMI technologies, of British Columbia, Canada.

FIG. 2 illustrates a schematic diagram showing operation of a laser triangulation sensor 11 for distance measurement of a desired point of the object 100. In one example, the stand off distance d1 of the laser triangulation sensor 11 is 140mm. The measurement range d2 of the laser triangulation sensor 11 is in a range of from 0mm to 220mm. In other examples, the stand off distance d1 and the measurement range d2 may vary based on different applications.

As illustrated in FIG. 2, the laser triangulation sensor 11 comprises a laser source 15, a lens unit 16, and a distance processor 17. The laser source 15 is configured to generate and transmit the laser 14 for projection onto a point of the object 100. The lens unit 16 may comprise an object lens and is configured to capture and transmit a reflected light beam 18 from the point of the object 100 to the distance processor 17 to retrieve a distance to the point of the object 100. In some non-limiting examples, the distance processor 17 may comprise a position sensitive detector including a monolithic PIN photodiode with a uniform resistance in one or two dimensions.

Thus, during operation, the laser source 15 generates and transmits the laser 14 for projection onto the desire point of the object 100. Then, the lens unit 16 captures and transmits the reflected light beam 18 from the point of the object 100 to the position sensitive detector 17 to retrieve the distance to the point of the object 100. For the illustrated arrangement, the lens unit 16 comprises an optical axis (not shown) located at an angle to an axis (not shown) of the projected laser 14 from the laser source 15, which may be referred to as a triangulation distance measurement.

Additionally, as depicted in FIG. 2, when the object 100 moves within the measurement range d2, a plurality of distances to the point of the object 100 may be retrieved according to the positions of the object 100 within the measurement range d2. It should be noted that the arrangement of the laser triangulation sensor 11 in FIG. 2 is merely illustrative. The lens unit 16 may comprise one or more optical elements. Additionally, other optical distance sensors may comprise other suitable elements to perform the distance measurement.

For the arrangement in FIG. 1, the first optical module 12 is configured to receive the light beam 14, and generate and transmit four light beams 20, 21, 22, 23 along four different light channels 24, 25, 26, 27 for projection onto respective points of an object. In non-limiting examples, the first optical module 12 may receive a single light beam 14 and generate two or more light beams along two or more respective different light channels.

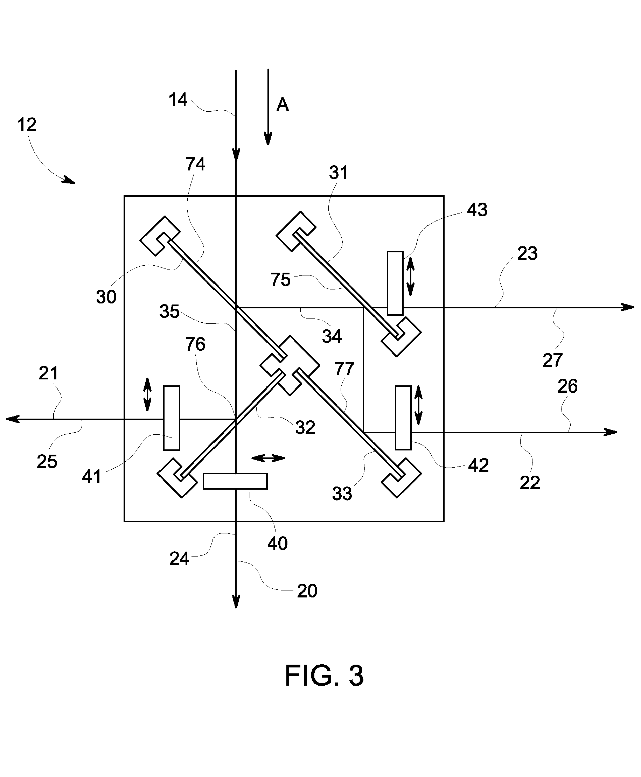

FIG. 3 illustrates a schematic diagram of an exemplary first optical module 12 of the distance measurement system 10 in accordance with one embodiment of the invention. As illustrated in FIG. 3, the first optical module 12 comprises first, second and third beam splitting elements 30, 31, 32 and a beam-reflecting element 33. The beam splitting elements 30, 31, 32 comprise splitting surfaces 74, 75, 76, and the beam-reflecting element 33 comprises a reflecting surface 77. In the illustrated example, the beam splitting elements 30, 31, 32 comprise plane beam splitting elements including, but not limited to plane beam splitting mirrors. The beam-reflecting element 33 comprises a plane beam-reflecting element including, but not limited to a plane beam-reflecting mirror.

As depicted in FIG. 3, in one non-limiting example, the beam splitting element 30 is disposed in a position, so that the light beam 14 is split into a light beam 34, which is transmitted along a direction perpendicular to a projection direction 'A' of the light beam 14, and a light beam 35 passing through the beam splitting element 30 along the projection direction 'A' on the splitting surface 74 of the beam splitting element 30.

The reflecting surface 77 of the beam-reflecting element 33 is disposed to be in flush with the splitting surface 74 of the beam splitting element 30. The beam splitting elements 31, 32 are disposed at an upper position and a lower position relative to the beam splitting element 30, and the splitting surface 75 of the beam splitting element 31 is disposed parallel to the splitting surface 74 of the beam splitting element 30 and the splitting surface 76 of the beam splitting element 32 is disposed perpendicularly to the splitting surface 74 of the beam splitting element 30.

Thus, during operation, the light beam 14 is transmitted into the first optical module 12 and is split by the beam splitting element 30 into the light beams 34, 35. The light beam 35 is projected onto the beam splitting element 32 along the projection direction of the light beam 14. Subsequently, the light beam 35 is split into the first light beam 20 and the second light beam 21. The first light beam 20 passes through the beam splitting element 32 and is transmitted out of the first optical module 12 along the first light channel 24, which may be overlapped with the projection direction. The second light beam 21 is reflected out of the first optical module 12 from a left side thereof by the beam splitting element 32 along the second light channel 25 perpendicular to the projection direction.

Meanwhile, the light beam 34 is projected onto the beam splitting element 31 along the direction perpendicular to the projection direction 'A' and is split into the third light beam 22 and the fourth light beam 23. The third light beam 22 is reflected along a direction perpendicular to the light beam 34 by the beam splitting element 31 onto the beam-reflecting element 33, and then is reflected out of the first optical module 12 along the third light channel 26 perpendicular to the projection direction. The fourth light beam 23 passes through the beam splitting element 31 and is transmitted out of the first optical module 12 along the fourth light beam spaced away from and parallel to the third light channel.

In some applications, the light beams 20, 21, 22, 23 may be selectively transmitted for projection onto the respective points of the object. In one non-limiting example, one of the light beams 20, 21, 22, 23 may be selectively transmitted for projection onto the object each time. Accordingly, as illustrated in FIG. 3, the first optical module 12 further comprises a plurality of moveable shutters 40, 41, 42, 43 disposed to open and close the respective light channels 24, 25, 26, 27. For example, when the light beam 20 is selectively projected onto the object 100, the moveable shutter 40 releases the light channel 24 and the moveable shutters 41, 42, 43 close the respective light channels 25, 26, 27.

For some arrangements, after the light beams 20, 21, 22, 23 are projected onto the respective objects, reflected light beams (not shown) scattered back from the respective objects may be captured and transmitted to the optical distance sensor 11 by the first optical module 12 to retrieve the distances to the points of the respective objects. In the illustrated example, for easy illustration, some reflected light beams may not be illustrated. The operation of the optical distance sensor 11, such as a laser triangulation sensor is illustrated in FIG. 2 for clarification. In some applications, the light beams 20, 21, 22, 23 and the respective reflected light beams may be transmitted by the same optical elements of the first optical module 12.

It should be noted that the arrangement in FIG. 3 is merely illustrative. In some examples, the first optical module 12 may comprise one or more beam splitting elements to generate two or more light beams. One or more beam-reflecting elements may also be employed. The positions of one or more the beam splitting elements and the one or more beam-reflecting elements may vary based on different applications.

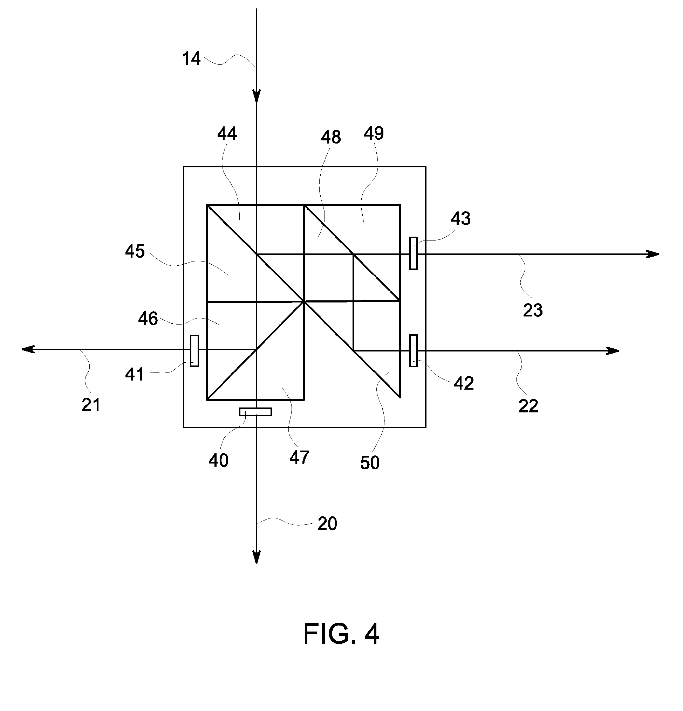

FIG. 4 illustrates a schematic diagram of an exemplary first optical module 12 of the distance measurement system 10 in accordance with another embodiment of the invention. The arrangement in FIG. 4 is similar to the arrangement in FIG. 3. The two arrangements differ in that in FIG. 4, a plurality of beam splitting prisms 44-49 and a beam-reflecting prism 50 are employed instead of the beam splitting mirrors 30-32 and the beam-reflecting mirrors 33 illustrated in FIG. 3. In some applications, the beam splitting prisms 44, 46 and/or 48 may not be employed.

Thus, during operation, after the light beam 14 is projected into the first optical module 12, via the beam splitting prisms 44, 45, 46, 47, the first and second light beams 20, 21 are generated. Via the beam splitting prisms 44, 45, 48, 49 and the beam-reflecting prism 50, the third and fourth light beams 22, 23 are also generated. Similarly, a plurality of moveable shutters 40, 41, 42, 43 may also be employed to selectively open and close the respective first, second, third and fourth light beams 20, 21,22,23.

In the illustrated example in FIG. 1, the optical distance sensor 11 may retrieve a plurality of distance data to a point of the object 100. Thus, the processor 13 may be configured to receive and process, for example, to average the distance data from the optical distance sensor 11 to generate position information, such as an averaged distance to the point of the object.

In certain applications, the optical distance sensor 11 may also retrieve a plurality of distance data to two or more respective points of the object. As a result, the processor 13 may calculate the position information, such as a distance between two points of the object. In other applications, for the distance measurement of the same one point of the object, the processor 13 may also identify a maximum distance and a minimum distance from the plurality of distance data retrieved by the optical distance sensor 11, and generate the position information, such as a distance difference between the maximum distance and the minimum distance. In non-limiting examples, if the distance difference does not exceed a predetermined threshold distance, the object may be machined normally. If the distance difference exceeds the predetermined threshold distance, the object may be machined abnormally.

For some arrangements, the processor 13 may be not limited to any particular processor for performing the processing tasks of the invention. The term "processor", as that term is used herein, is intended to denote any machine capable of performing the calculations, or computations, necessary to perform the tasks of the invention. The term "processor" is intended to denote any machine that is capable of accepting a structured input and of processing the input in accordance with prescribed rules to produce an output, as will be understood by those skilled in the art.

In some applications, for the arrangement in FIG. 1, the distance measurement system 10 may further comprise a power source 28, such as a battery to energize the optical distance sensor 11 and the processor 13. A monitor (not shown) may also be connected to the processor 13 and may comprise a display, such as a liquid crystal display (LCD), to display the distances between or to desired points on the object. In other applications, the power source 28 and the monitor may not be employed in the distance measurement system 10.

As depicted in FIG. 1, for some arrangements, the distance measurement system 10 may further comprise a second optical module 51 and a third optical module 52. The second optical module 51 is disposed at one side of the first optical module 12 to receive the second light beam 21. The third optical module 52 is disposed at the other side of the first optical module 12 to receive the third light beam 22. In certain applications, the positions of the second and third optical module 51, 52 may vary based on different applications to receive desired light beams from the first optical module 12. In other applications, the second optical module 51 and/or the third optical module 52 may or may not be employed.

For the illustrated arrangement in FIG. 1, the second optical module 51 receives the second light beam 21 and generates light beams 53, 54, which are transmitted outside from left and right sides of the second optical module 51, respectively. The third optical module 52 receives the third light beam 22 and generates light beams 55, 56, which are transmitted outside from upper and lower sides of the third optical module 52.

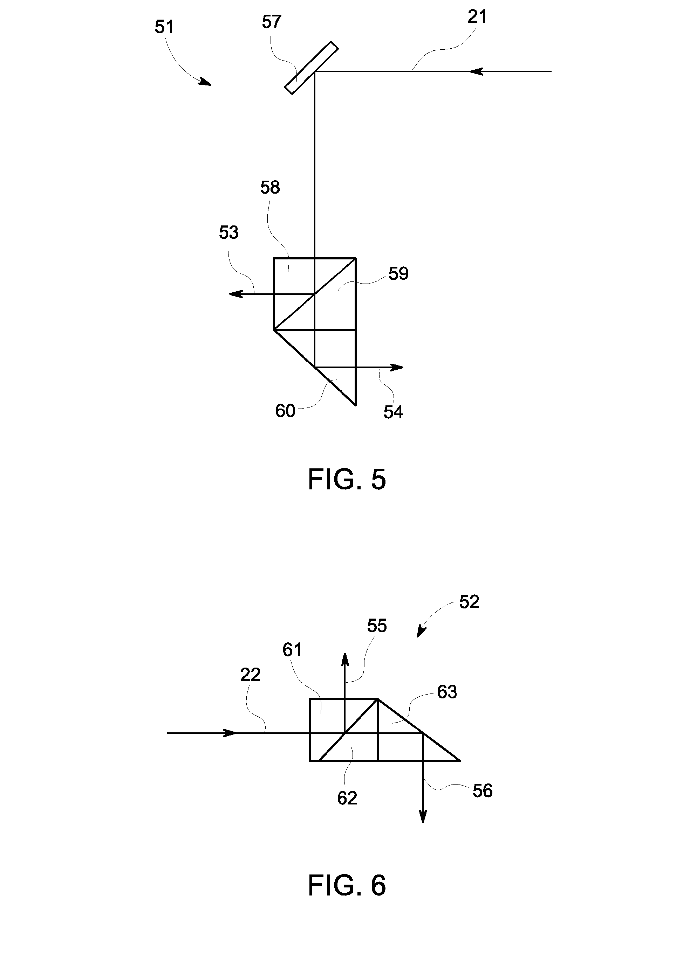

FIGS. 5-6 illustrate schematic diagrams of the second and third optical modules 51, 52 of the distance measurement system 10 in accordance with one embodiment of the invention. As illustrated in FIG. 5, the second optical module 51 comprises a beam-reflecting element 57, a pair of beam splitting prisms 58, 59 and a beam-reflecting prism 60. In non-limiting examples, the reflecting element 57 may comprise a reflecting mirror. In other applications, the beam-reflecting element 57 may comprise a beam-reflecting prism, and a plurality of beam splitting mirrors may also be employed instead of the beam splitting prisms 58, 59. The beam splitting prism 58 may not be employed.

Thus, during operation, the second light beam 21 is reflected by the beam-reflecting element 57 and then is split into the light beams 53, 54 by the beam splitting prism 59. The light beam 53 is projected onto the object (not shown) along a direction perpendicular to the reflected light beam 21. The light beam 54 is reflected and projected onto the object (not shown) by the beam-reflecting prism 60 along a direction opposite to the direction of the light beam 53.

After projection of the light beams 53, 54 onto the respective points of the object, the respective reflected light beams (not shown) scattered from the respective objects may be captured and transmitted to the first optical module 12 by the second optical module 51 for detection by the optical distance sensor 11. Thus, after passing through the second optical module 51, the second light beam 21 may be selectively projected onto one or more points of the object without movement of the distance measurement system 10. In certain applications, the light beams 53, 54 and the respective reflected light beams may be transmitted between the optical distance sensor 11 and the respective objects by the same optical elements of the first and second optical modules 12, 51.

For the illustrated arrangement in FIG. 6, the third optical module 52 comprises a pair of beam splitting prisms 61, 62 and a beam-reflecting prism 63 disposed behind the beam splitting prisms 61, 62. In some applications, a beam splitting mirror and a beam reflecting mirror may be employed instead of the beam splitting prisms 61, 62 and the beam-reflecting prism 63. In certain applications, the beam splitting prism 61 may or may not be employed.

Thus, during operation, the third light beam 22 is split into the light beams 55, 56 by the beam splitting prism 62. The light beam 55 is projected onto the object along a direction perpendicular to the third light beam 22. The light beam 56 is reflected and projected onto the object by the beam-reflecting prism 63 along a direction opposite to the direction of the light beam 55.

Similarly, after projection of the light beams 55, 56 onto the respective objects, the respective reflected light beams (not shown) scattered from the respective objects may be captured and transmitted to the firs optical module 12 by the third optical module 52 for detection by the optical distance sensor 11. Thus, without movement of the distance measurement system 10, after passing through the third optical module 51, the third light beam 22 may also be selectively projected onto one or more points of the object. In certain applications, the light beams 55, 56 and the respective reflected light beams may be transmitted between the optical distance sensor 11 and the respective objects by the same optical elements of the first and third optical module 12,52.

For certain arrangements, one of the light beams 53-56 may be selectively projected onto the respective objects. In some examples, similar to the arrangements in FIGS. 3-4, a plurality of shutters (not shown) may be employed to open and close light channels of the respective light beams 53-56.

In other examples, the beam splitting prisms 59, 62 may comprise polarized beam splitting prisms and the distance measurement system 10 further comprise a linear polarizer 64 and a movable half-wave element 65 disposed between the optical distance sensor 11 and the first optical module 12, as depicted in FIG. 1. In some examples, the half-wave element 65 may move in and out of an optical path (not labeled) of the light beam 14 and may comprise a have-wave plate with a fast axis having an angle, such as 45 degrees with a polarization direction of the light beam 14.

Thus, as depicted in FIG. 5, during operation, when the second light beam 21 is transmitted to the second optical module 51, due to existence of the linear polarizer 64 and the polarized beam spitting prism 59, the light beam 53 may be generated and the light beam 54 may not be generated. When the half wave element 65 moves in the optical path of the light beam 14, the polarization state of the light beam 14 after passing through the linear polarizer 64 may be changed, so that the light beam 53 may not generated and the light beam 54 may be generated.

Similarly, for the arrangement in FIG. 6, via the cooperation of the linear polarizer 64, the half wave element 65, and the polarized beam splitting prism 62, the light beams 55, 56 may be selectively projected onto the points of the respective objects. In certain applications, for the arrangement in FIG. 4, one or more beams splitting prisms may also comprise one or more respective polarized beam splitting prisms.

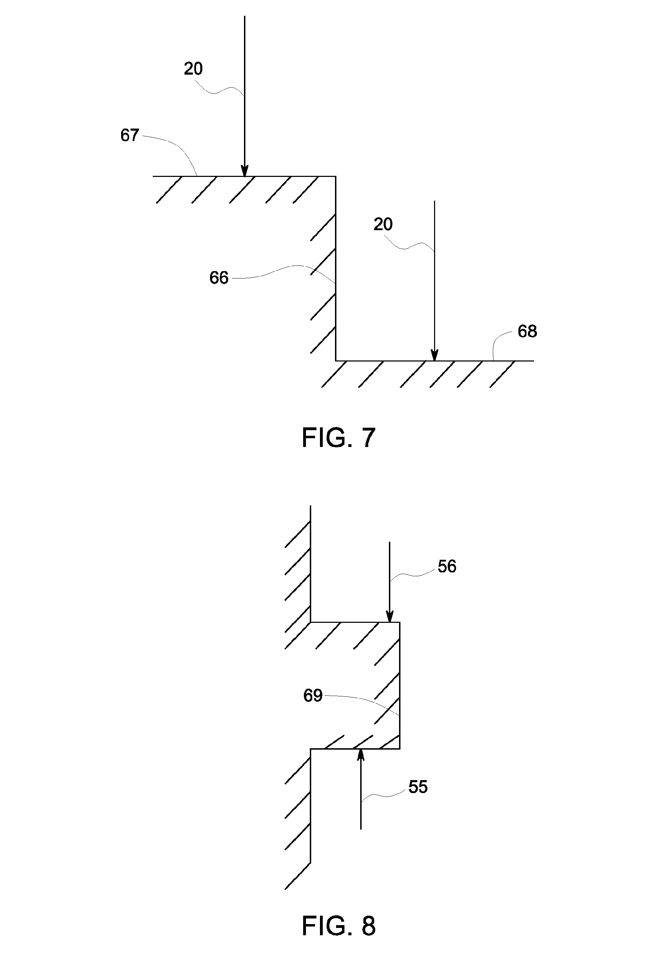

FIGS. 7-11 illustrates schematic diagrams illustrating measurements of distances between and/or to points of the objects in accordance with various embodiments. As illustrated in FIG. 7, the distance measurement system 10 measures a height of a step 66. During measurement, the first light beam 20 may be projected onto a point (not labeled) of an upper surface 67 to determine a distance data to the point of the upper surface 67. Then, the first light beam 20 is moved to a point of a lower upper surface 68 to generate a distance data to the point of the lower surface 68. Finally, the height of the step 66 between the upper and lower surfaces 67, 68 may be determined in the processor 13 based on the determined distance data of the points on the upper and lower surfaces 67, 68.

In certain applications, the optical distance sensor 11 may retrieve more than one, for example more than a thousand of distance data to the point of the object. Thus, during measurement of a distance to the point of the upper surface 67, more than one distance data may be retrieved by the optical distance sensor 11 and then be transmitted into the processor 13 for processing to generate a first processed distance. In one non-limiting example, the processor 13 may average the more than one distance data to generate an averaged distance.

Similarly, during measurement of a distance to the point of the lower surface 68, the processor 13 processes the more than one distance data to the point of the lower surface 68, which is retrieved by the optical distance sensor 11, and generates a second processed distance. Finally, the processor 13 may determine the height of the step 66 by calculating the differences between the first and second processed distance distances. In certain applications, the processor 13 may process the distance data after the more than one distance data to each of the two points of the upper and lower surfaces 67, 68 are retrieved.

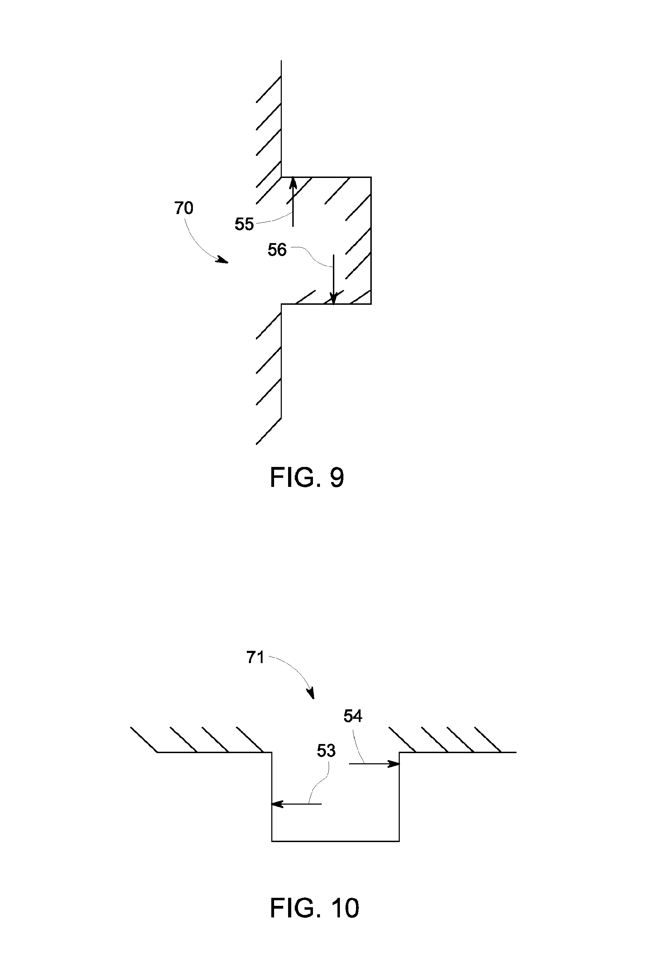

Similar to the arrangement in FIG. 7, the distance measurement system 10 may be used to determine a thickness of a step 69 (as illustrated in FIG.8) via the light beams 55, 56, a height of a groove 70 (as illustrated in FIG. 9) via the light beams 55, 56, and a width of a groove 71 (as illustrated in FIG. 10) via light beams53, 54, respectively.

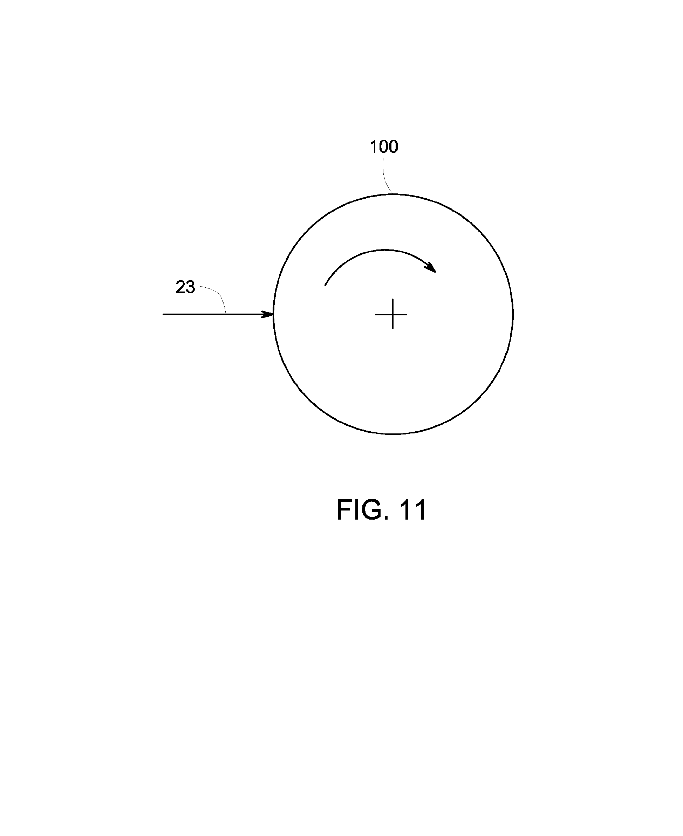

As illustrated in FIG. 11, the first or fourth light beam 20 or 23 may be used to determine a diameter of an object 100. Similarly, during rotation of the object 100, the first or fourth light beam 20 or 23 may be projected onto the object 100. Based on the reflected light beam from the object 100, the optical distance sensor 11 may retrieve and transmit a plurality of diameter data to the processor 13 for processing to get a processed diameter data.

In some applications, the processor 13 may identify a maximum diameter data and a minimum diameter data from the diameter data retrieved by the optical distance sensor 11 and determine if a diameter difference between the maximum data and the minimum data are larger than a predetermined threshold value. In one non-limiting example, if the diameter difference does not exceed a predetermined threshold value, the object may be machined normally. If the diameter difference exceeds the predetermined threshold value, the object may be machined abnormally.

Similarly, for the arrangements in FIGS. 7-10, during measurement of distance to each point, the processor 13 may also identify a maximum distance data and a minimum distance data from the distance data retrieved by the optical distance sensor 11.

In some applications, since the distances may be measured based on the light beams with different light channels, the distance measurement system 10 may be calibrated so that distances to a point, which may be measured via the light beams with different light channels, may be identified in the same one coordinate system, for example, to facilitate communication with a computer numerical controlled (CNC) machining system. That is, after calibration, the distances to a point may be the same, which may be measured by the distance measurement system 10 via the light beams with different light channels. In some examples, the calibration of the distance measurement system 10 may be performed by experiments and/or experiences.

In some embodiments, as illustrated in FIG. 1, the processor 13 of the distance measurement system 10 may communicate with a computer numerical controlled (CNC) machining system 72 to provide dimension information, such as distances between and/or to desired points of a machined object, so that the machining system 72 may adjust machining parameters to proceed with subsequent machining. In certain applications, the processor 13 may communicate with the machining system 72 via wireless connection or cable connection.

For the illustrated arrangement in FIG. 1, the distance measurement system 10 may further comprise a holding element 73, through which the distance measurement system 10 may be detachably assembled onto the machining system 72, so that during measurement, the object to be machined may not be detached from the machining system 72, and a lot of time may be saved compared to the conventional measurement systems.

In embodiments of the invention, the distance measurement system 10 may generate a plurality of light beams along different light channels. Thus, based on the different applications, for example, measurements of different part features, such as steps and grooves, desired light beams may be selectively generated to perform the measurement, which may be efficient and provide better access capability for measurement of different part features. Compared to the conventional measurement systems, the distance measurement system 10 may generate more than one distance data to a point of an object for being processed so as to provide the position information with high quality. In addition, the distance measurement system 10 may communicate with the CNC machining system to assure the machining quality and retrofit the conventional CNC machining systems.

Various aspects and embodiments of the invention are indicated in the following clause:
1. A distance measurement system, comprising:
   an optical distance sensor configured to generate a light beam;
   a first optical module configured to:
      receive the light beam and generate a plurality of light beams having different light channels,
      selectively transmit the light beams having different light channels for projection onto one or more points of an object to generate one or more reflected light beams scattered from the respective one or more points of the object, and
      capture and transmit the one or more reflected light beams into the optical distance sensor to retrieve a plurality of distance data to the respective one or more points of the obj ect; and
      a processor configured to process the distance data to determine position information of the respective one or more points of the object.
2. The distance measurement system of clause 1, wherein the first optical module comprises one or more beam splitting elements.
3. The distance measurement system of clause 2, wherein the first optical module comprises one or more beam reflecting elements to cooperate with the one or more beam splitting elements.
4. The distance measurement system of clause 3, wherein the first optical module comprises first, second and third beam splitting elements and one beam reflecting element.
5. The distance measurement system of clause 4, wherein the first beam splitting element is disposed to split the light beam from the optical distance into the a light beam transmitted along a direction perpendicular to a projection direction of the light beam and a light beam transmitted along the projection direction.
6. The distance measurement system of clause 5, wherein a splitting surface of the second beam splitting element is disposed parallel to a splitting surface of the first beam splitting element, a splitting surface of the third beam splitting element is disposed perpendicularly to the splitting surface of the first beam splitting element, and wherein a reflecting surface of the beam-reflecting element is disposed to be in flush with the splitting surface of the first beam splitting element.
7. The distance measurement system of clause 1, wherein further comprising a second optical module configured to receive one of the light beams from the first optical module, and generate and selectively transmit two light beams from respective right and left sides of the second optical module for projection onto the one or more respective points of the obj ect.
8. The distance measurement system of clause 7, wherein the second optical module comprises a beam-reflecting mirror, a beam-reflecting prism and one or more beam splitting prisms disposed between the beam-reflecting mirror and the beam-reflecting prism.
9. The distance measurement system of clause 1, wherein further comprising a third optical module configured to receive one of the light beams from the first optical module, and generate and selectively transmit two light beams from respective upper and lower sides of the third optical module for projection onto the one or more respective points of the obj ect.
10. The distance measurement system of clause 9, wherein the third optical module comprises one or more beam splitting prisms and a beam reflecting prism located behind the one or more beam splitting prisms.
11. The distance measurement system of clause 1, further comprising a linear polarizer and a movable half-wave element disposed between the optical distance sensor and the first optical module.
12. The distance measurement system of clause 1, wherein the first optical module comprises a plurality of shutters disposed to open and close the light channels of the light beams from the first optical module.
13. The distance measurement system of clause 1, further comprising a holding element for assembling the distance measurement system onto a computer numerical controlled machining system, and wherein the processor communicates with the computer numerical controlled machining system.
14. The distance measurement system of clause 1, wherein the optical distance sensor comprises a laser triangulation sensor.
15. A distance measurement method, comprising:
   introducing a light beam from an optical distance sensor into a first optical module;
   generating and selectively transmitting a plurality of light beams having different light channels for projection onto one or more points of an object to generate one or more reflected light beams scattered from the respective one or more points of the obj ect;
   capturing and transmitting the one or more reflected light beams into the optical distance sensor to retrieve a plurality of distance data to the respective one or more points of the obj ect; and
   processing the distance data to determine position information of the respective one or more points of the obj ect.
16. The distance measurement method of clause 15, wherein one of the light beams having different light channels is selectively projected onto the one or more points of the object each time.
17. The distance measurement method of clause 15, wherein the step of generating and selectively projecting the light beams having different light channels onto the one or more points of the object and the step of capturing and transmitting the one or more reflected light beams into the optical distance sensor are performed via the first optical module.
18. The distance measurement method of clause 15, further comprising introducing one of the light beams having different light channels into a second optical module to generate and selectively project two light beams from respective right and left sides of the second optical module onto the one or more respective points of the object.
19. The distance measurement method of clause 15, further comprising introducing one of the light beams having different light channels into a third optical module to generate and selective project two light beams from respective upper and lower sides of the third optical module onto the one or more respective points of the object.
20. The distance measurement method of clause 15, wherein the step of processing the distance data comprises averaging the distance data to determine averaged distances to the respective one or more points of the object.
21. The distance measurement method of clause 20, wherein the step of processing the distance data comprises identifying a maximum data and a minimum data among the distance data to each of the one or more points of the objects.
22. The distance measurement method of clause 21, wherein the step of processing the distance data comprises calculating distance differences between two points of the object based on the averaged distances to the respective two points of the object.
23. The distance measurement method of clause 15, further providing a linear polarizer and a movable half-wave element disposed between the optical distance sensor and the first optical module before the light beam from the optical sensor is introduced into the first optical module.
24. The distance measurement method of clause 15, further comprising introducing the position information into a computer numerical controlled machining system.

## Claims

1. A distance measurement system, comprising:
an optical distance sensor configured to generate a light beam;
a first optical module configured to:
receive the light beam and generate a plurality of light beams having different light channels,
selectively transmit the light beams having different light channels for projection onto one or more points of an object to generate one or more reflected light beams scattered from the respective one or more points of the object, and
capture and transmit the one or more reflected light beams into the optical distance sensor to retrieve a plurality of distance data to the respective one or more points of the obj ect; and
a processor configured to process the distance data to determine position information of the respective one or more points of the object.

2. The distance measurement system of claim 1, wherein the first optical module comprises one or more beam splitting elements.

3. The distance measurement system of claim 2, wherein the first optical module comprises one or more beam reflecting elements to cooperate with the one or more beam splitting elements.

4. The distance measurement system of claim 3, wherein the first optical module comprises first, second and third beam splitting elements and one beam reflecting element.

5. The distance measurement system of claim 4, wherein the first beam splitting element is disposed to split the light beam from the optical distance sensor into a light beam transmitted along a direction perpendicular to a projection direction of the light beam and a light beam transmitted along the projection direction.

6. The distance measurement system of either of claim 4 or 5, wherein a splitting surface of the second beam splitting element is disposed parallel to a splitting surface of the first beam splitting element, a splitting surface of the third beam splitting element is disposed perpendicularly to the splitting surface of the first beam splitting element, and wherein a reflecting surface of the beam-reflecting element is disposed to be in flush with the splitting surface of the first beam splitting element.

7. The distance measurement system of any preceding claim, wherein further comprising a second optical module configured to receive one of the light beams from the first optical module, and generate and selectively transmit two light beams from respective right and left sides of the second optical module for projection onto the one or more respective points of the object.

8. The distance measurement system of any preceding claim, further comprising a linear polarizer and a movable half-wave element disposed between the optical distance sensor and the first optical module.

9. A distance measurement method, comprising:
introducing a light beam from an optical distance sensor into a first optical module;
generating and selectively transmitting a plurality of light beams having different light channels for projection onto one or more points of an object to generate one or more reflected light beams scattered from the respective one or more points of the obj ect;
capturing and transmitting the one or more reflected light beams into the optical distance sensor to retrieve a plurality of distance data to the respective one or more points of the obj ect; and
processing the distance data to determine position information of the respective one or more points of the obj ect.

10. The distance measurement method of claim 9, wherein one of the light beams having different light channels is selectively projected onto the one or more points of the object each time.

11. The distance measurement method of either of claim 9 or 10, wherein the step of generating and selectively projecting the light beams having different light channels onto the one or more points of the object and the step of capturing and transmitting the one or more reflected light beams into the optical distance sensor are performed via the first optical module.

12. The distance measurement method of any of claims 9 to 11 , further comprising introducing one of the light beams having different light channels into a second optical module to generate and selectively project two light beams from respective right and left sides of the second optical module onto the one or more respective points of the obj ect.

13. The distance measurement method of any of claims 9 to 12, further comprising introducing one of the light beams having different light channels into a third optical module to generate and selective project two light beams from respective upper and lower sides of the third optical module onto the one or more respective points of the object.

14. The distance measurement method of any of claims 9 to 13, wherein the step of processing the distance data comprises averaging the distance data to determine averaged distances to the respective one or more points of the object.

15. The distance measurement method of any of claims 9 to 14, further providing a linear polarizer and a movable half-wave element disposed between the optical distance sensor and the first optical module before the light beam from the optical sensor is introduced into the first optical module.
